# EUROPÄISCHE PATENTSCHRIFT

(11) **EP 2 595 467 B1**
(45) Veröffentlichungstag und Bekanntmachung des Hinweises auf die Patenterteilung: **23.07.2014**
(21) Anmeldenummer: 11782015.9
(22) Anmeldetag: 22.07.2011
(51) Int. Cl.: A01D 41/12, A01F 12/44

(54) **VORRICHTUNG AN MÄHDRESCHERN UND MÄHDRESCHER MIT EINER SOLCHEN VORRICHTUNG**
DEVICE ON COMBINE-HARVESTERS AND COMBINE-HARVESTER WITH A DEVICE OF THIS TYPE
DISPOSITIF MONTÉ SUR DES MOISSONNEUSES-BATTEUSES ET MOISSONNEUSE-BATTEUSE ÉQUIPÉE D'UN DISPOSITIF DE CE TYPE

(30) Priorität: 23.07.2010 DE 102010032156
(43) Veröffentlichungstag der Anmeldung: 29.05.2013
(73) Patentinhaber: Wagner, Alfred, 35075 Gladenbach (DE)
(72) Erfinder: Wagner, Alfred, 35075 Gladenbach (DE)
(74) Vertreter: Körner, Volkmar Horst
(86) Internationale Anmeldenummer: PCT/DE2011/001489
(87) Internationale Veröffentlichungsnummer: WO 2012/022293

(56) Entgegenhaltungen:
- DE-A1- 4 209 503
- US-A- 2 609 929
- US-A- 3 448 933

## Beschreibung

Die Erfindung betrifft eine Vorrichtung an Mähdreschern, bei welchem Spreu und Wildkrautsamen in einem Luftstrom getrennt werden mit einem zur Anordnung in dem Luftstrom vorgesehenen Prallblech zur Abtrennung von Wildkrautsamen aus dem Luftstrom und einem dem Prallblech zugeordneten Auffangbehälter für Wildkrautsamen. Weiterhin betrifft die Erfindung einen Mähdrescher mit einer solchen Vorrichtung.

Bei heutigen Mähdreschern wird eine Ernte nach dem Dreschen in einer Dreschtrommel über Siebe gefördert und ei, nem Luftstrom ausgesetzt. Dabei werden Spreu und Strohreste durch den Luftstrom von der Frucht entfernt. Die Spreu wird anschließend von dem Luftstrom zurück auf das Feld gefördert. Häufig ist die Ernte jedoch mit Wildkräutern und deren Samen verunreinigt. Da vermieden werden soll, dass die Wildkrautsamen die Frucht verunreinigen, wird der Luftstrom meist derart eingestellt, dass die im Vergleich zur Frucht leichten Wildkrautsamen von dem Luftstrom mitgerissen werden. Über diesen Luftstrom gelangen die Wildkrautsamen wieder auf das Feld. Damit tragen derartige Mähdrescher zur Verbreitung von Wildkräutern bei.

Um eine Ausbreitung der Wildkräuter zu verhindern, werden häufig verschiedenste Spritzmittel auf das Feld aufgebracht. Abgesehen von den Kosten für das Spritzmittel und dem Arbeitsgang des Ausbringens des Spritzmittels, führt diese Wildkrautbekämpfung zu einer Belastung der auf dem Feld angebauten Nahrungsmittel und zu einer Belastung des Grundwassers mit krebserregenden Stoffen.

Aus der US 2,609,929 ist eine Vorrichtung bekannt geworden, bei der Wildkrautsamen aus dem Luftstrom abgefangen werden können. Hierzu ist ein offener Auffangbehälter mit einem abstehenden Blech in dem Luftstrom angeordnet. In dem Luftstrom geförderte Teilchen werden in Abhängigkeit von der Schwerkraft abgeschieden. Die Trennung von Spreu und Wildkrautsamen gestaltet sich hierdurch sehr schwierig.

Aus der DE 42 09 503 A1 ist zudem eine Vorrichtung für Mähdrescher bekannt geworden, bei der bewegliche Siebkombinationen zum Abfangen von Wildkrautsamen vorgesehen sind. Solche Siebkombinationen können sich jedoch mit Spreu und Wildkrautsamen zusetzen. Damit ist die zuverlässige Abscheidung der Wildkrautsamen nicht zuverlässig gewährleistet.

Der Erfindung liegt das Problem zugrunde, eine Vorrichtung der eingangs genannten Art zu schaffen, bei der die Verbreitung von Wildkräutern weitgehend vermieden wird. Weiterhin soll ein Mähdrescher mit einer solchen Vorrichtung geschaffen werden.

Dieses Problem wird erfindungsgemäß dadurch gelöst, dass an der Oberseite des Auffangbehälters eine rotierende Stachelwalze angeordnet ist.

Durch diese Gestaltung lassen sich Wildkrautsamen einfach auffangen, weil sich deren Flugbahn im Luftstrom von denen der Frucht und der Spreu unterscheidet. Daher ist in Abhängigkeit der Art der Frucht und der Wildkrautsamen, sowie der Feuchtigkeit das Prallblech in einer geeigneten Position anzuordnen. Der dem Prallblech zugeordnete Auffangbehälter fängt die Wildkrautsamen auf, von wo sie abgeführt werden können. Damit wird das Ausbringen der Wildkrautsamen auf das geerntete Feld weitgehend vermieden. Die Wildkrautsamen können beispielsweise zu Briketts gepresst und als Brennstoff genutzt werden. Die erfindungsgemäße Vorrichtung lässt sich an vorhandenen Mähdreschern besonders einfach nachrüsten. Eine Verstopfung des Auffangbehälters und der daran angeschlossenen Förderein-richtung mit an dem Prallblech anfallenden Strohresten lässt sich einfach vermeiden, weil an der Oberseite des Auffangbehälters eine rotierende Stachelwalze angeordnet ist.

Für unterschiedliche Wildkrautsamen oder einen unterschiedlichen Feuchtegehalt der Frucht lässt sich die erfindungsgemäße Vorrichtung einfach einstellen, wenn das Prallblech in seiner Position verstellbar ist.

Die erfindungsgemäße Vorrichtung ermöglicht eine besonders vielfältige Einstellbarkeit, wenn das Prallblech in seiner Größe, mit der es in den Luftstrom hineinragt, verstellbar ist.

Zur Vereinfachung der Montage der erfindungsgemäßen Vorrichtung an einem herkömmlichen Mähdrescher trägt es bei, wenn der Auffangbehälter und das Prallblech eine bauliche Einheit bilden.

Die zur Abtrennung der Wildkrautsamen erforderlichen Mittel gestalten sich konstruktiv besonders einfach, wenn das Prallblech an einer in Strömungsrichtung des Luftstroms gesehen hinteren Wandung des Auffangbehälters angeordnet ist.

Die Größe der im Luftstrom anzuordnenden Bauteile lässt sich gemäß einer anderen vorteilhaften Weiterbildung der Erfindung besonders gering halten, wenn der Auffangbehälter über eine Fördereinrichtung mit einem Sammelbehälter für Wildkrautsamen verbunden ist. Durch diese Gestaltung kann der Auffangbehälter besonders kleine Abmessungen aufweisen. Die Anordnung des Sammelbehälters ist wegen der Fördereinrichtung an nahezu beliebigen Stellen des Mähdreschers möglich. Diese Gestaltung trägt zur weiteren Vereinfachung der Nachrüstbarkeit der erfindungsgemäßen Vorrichtung an vorhandenen Mähdreschern bei. Die Fördereinrichtung kann eine Förderschnecke oder bevorzugt eine Saug- oder Blaseinrichtung aufweisen.

Die erfindungsgemäße Vorrichtung gestaltet sich konstruktiv besonders einfach, wenn das Prallblech und ein den Auffangbehälter abdeckender Gitterrost als bauliche Einheit ausgebildet sind.

Das zweitgenannte Problem, nämlich die Schaffung eines Mähdreschers mit einer solchen Vorrichtung wird erfindungsgemäß dadurch gelöst, dass das Prallblech unmittelbar hinter einem Fruchtabscheider angeordnet ist.

Der Fruchtabscheider weist meist ein unterhalb des Luftstroms angeordnetes Sieb oder Lamellen auf, durch welches die Frucht fallen kann. Die leichteren Wildkrautsamen und die Spreu werden von dem Luftstrom über das Sieb oder über die Lamellen hinaus gefördert. Da Wildkrautsamen meist leichter von dem Luftstrom transportiert werden als die Frucht, jedoch häufig schwerer sind als der Spreu, wird durch die Anordnung des Prallblechs hinter dem Fruchtabscheider zur Abscheidung der Frucht die zuverlässige Abscheidung der Wildkrautsamen sichergestellt.

Zur Vereinfachung der Einstellbarkeit des Mähdreschers auf die abzuscheidenden Wildkrautsamen trägt es bei, wenn die Leistung eines den Luftstrom zur Förderung von Frucht, Wildkrautsamen und Spreu erzeugenden Gebläses einstellbar ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch einen Mähdrescher mit einer erfindungsgemäßen Vorrichtung,
- Fig. 2: schematisch eine Schnittdarstellung durch den Mähdrescher mit der erfindungsgemäßen Vorrichtung aus Figur 1,
- Fig. 3: einen Querschnitt durch das Prallblech mit einem Auffangbehälter für Wildkrautsamen,
- Fig. 4: eine Schnittdarstellung durch den Auffangbehälter aus Figur 3 entlang der Linie IV - IV,
- Fig. 5: einen Teilbereich eines Sammelbehälters der erfindungsgemäßen Vorrichtung bei der Entleerung.

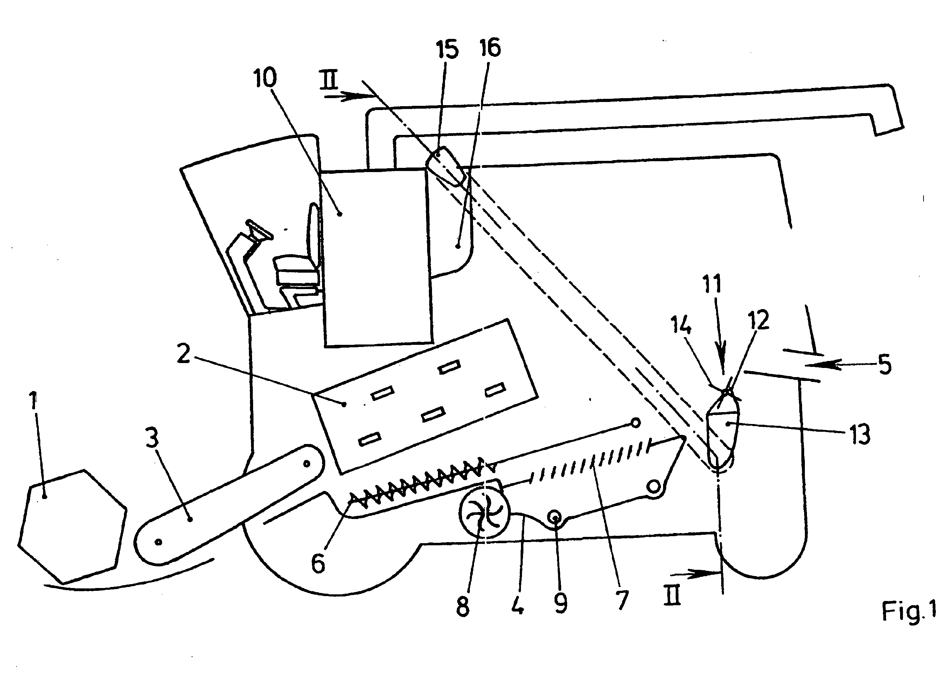

Figur 1 zeigt einen Mähdrescher mit einem Mähwerkzeug 1 und einer Dreschtrommel 2. Zwischen dem Mähwerkzeug 1 und der Dreschtrommel 2 ist eine Fördereinheit 3 angeordnet. Der Mähdrescher hat einen Fruchtabscheider 4 zur Abscheidung von Frucht und einen Spreuauswurf 5. Eine zwischen Dreschtrommel 2 und Fruchtabscheider 4 angeordnete Förderschnecke 6 transportiert eine aus der Dreschtrommel 2 ausfallende Mischung aus Frucht, Spreu und Wildkrautsamen zu einem Gitter 7. Bei dem Gitter 7 kann es sich beispielsweise um eng nebeneinander stehende Lamellen handeln. Unterhalb des Gitters 7 ist ein verstellbares Gebläse 8 zur Förderung von Frischluft angeordnet. Das Gebläse 8 erzeugt einen Luftstrom, welcher die leichten Bestandteile der aus der Dreschtrommel 2 ausfallenden Mischung mitreißt. Die schweren Bestandteile sind die Frucht, welche durch das Gitter 7 in den Fruchtabscheider 4 fallen und über eine senkrecht zur Zeichenebene angeordnete Transporteinrichtung 9 in einen Tank 10 abtransportiert werden. Die verbleibende Mischung aus Wildkrautsamen und Spreu gelangt zu einer Vorrichtung 11 zur Abtrennung und Sammlung von Wildkrautsamen. Diese Vorrichtung 11 hat ein vor dem Spreuauswurf 5 angeordnetes und in seiner Position und Größe verstellbares Prallblech 12 und einen Auffangbehälter 13 für Wildkrautsamen. Da die Wildkrautsamen etwas schwerer sind als die Spreu werden sie von dem Prallblech 12 in den Auffangbehälter 13 geleitet. Oberhalb des Auffangbehälters 13 ist zudem eine rotierende Stachelwalze 14 angeordnet. Der Auffangbehälter 13 ist über eine Fördereinrichtung 15 mit einem Sammelbehälter 16 für Wildkrautsamen verbunden. Die Fördereinrichtung 15 kann die Wildkrautsamen über einen Luftstrom mittels Gebläses oder über eine Förderschnecke fördern.

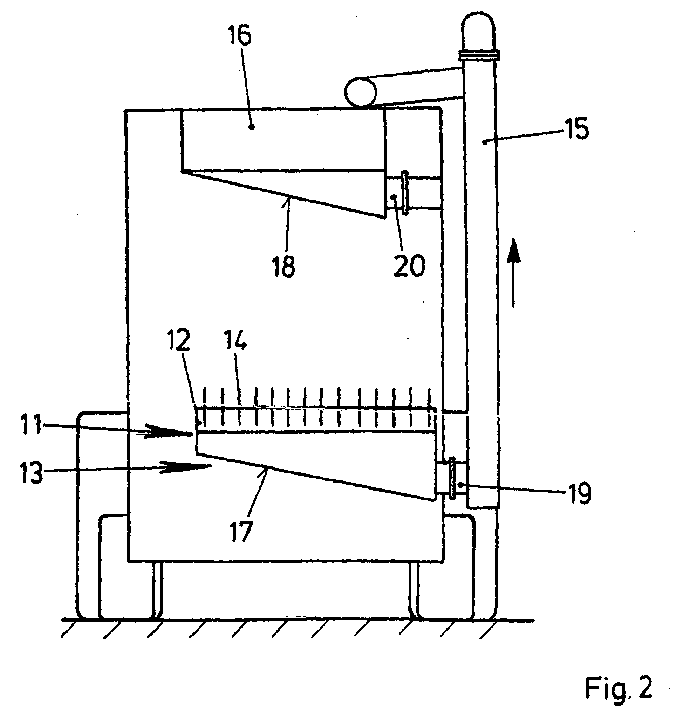

Figur 2 zeigt schematisch den Mähdrescher aus Figur 1 in einer Schnittdarstellung entlang der Linie II - II durch wesentliche Bauteile der Vorrichtung 11. Hierbei ist zu erkennen, dass der Auffangbehälter 13 und der Sammelbehälter 16 jeweils einen geneigten Boden 17, 18 aufweisen, so dass Wildkrautsamen durch die Schwerkraft zu einer Seite gelangen. An der tiefsten Stelle des Auffangbehälters 13 und des Sammelbehälters 16 befindet sich jeweils ein Entnahmestutzen 19, 20 zum Abführen der Wildkrautsamen. Die Fördereinrichtung 15 fördert Wild-krautsamen vom Bodenbereich des Auffangbehälters 13 von oben in den Sammelbehälter 16.

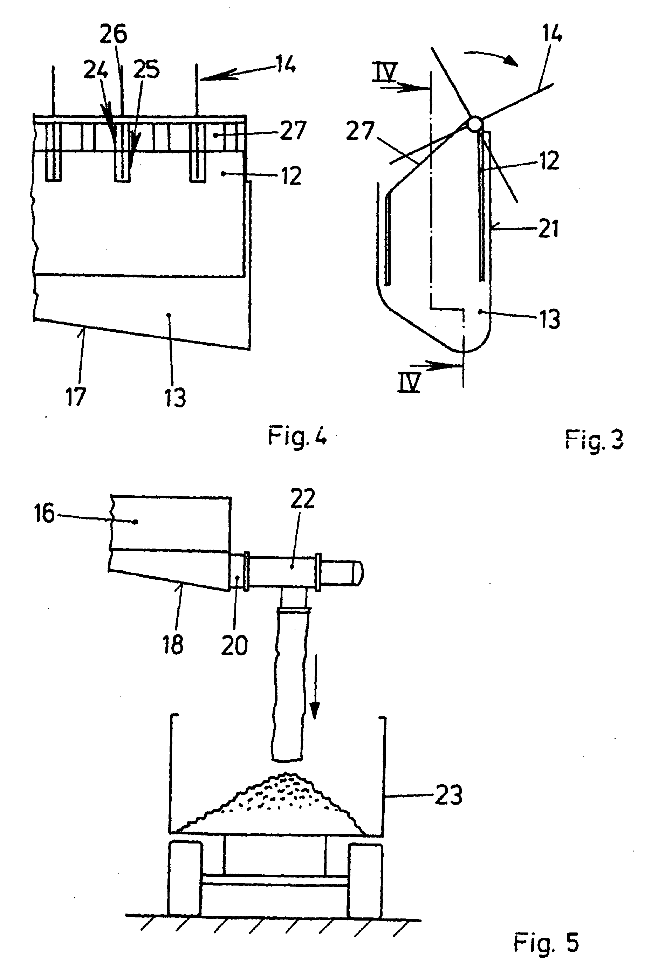

Figur 3 zeigt einen Querschnitt durch den Auffangbehälter 13 und das Prallblech 12 mit der Stachelwalze 14. Die Drehrichtung der Stachelwalze 14 ist in der Zeichnung mit einem Pfeil gekennzeichnet. Das Prallblech 12 ist an einer in Strömungsrichtung des Luftstroms aus Figur 1 gesehen hinteren Wandung 21 des Auffangbehälters 13 angeordnet und lässt sich in den Auffangbehälter 13 einschieben. Durch die Einschiebbarkeit ist das Prallblech 12 in seiner Position und in seiner Größe, mit der es in den Luftstrom hineinragt, verstellbar. Der Auffangbehälter 13 wird von einem mit dem Prallblech 12 verbundenen Gitterrost 27 abgedeckt.

Figur 4 zeigt zur Verdeutlichung einen Längsschnitt durch den Auffangbehälter 13 mit der Stachelwalze 14 und dem Prallblech 12 aus Figur 3 entlang der Linie IV - IV. Hierbei ist zu erkennen, dass das Prallblech 12 und die hintere Wandung 21 des Auffangbehälters 13 jeweils Längsschlitze 25 zur Durchführung von Stacheln 26 der Stachelwalze 14 haben. Der Gitterrost 27 hat ebenfalls zur Durchführung der Stacheln 26 der Stachelwalze 14 eine Vielzahl von Schlitzen 24. In dem dargestellten Ausführungsbeispiel hat der Gitterrost 27 doppelt so viele Schlitze wie die Stachelwalze 14 Stacheln. Prallblech 12, Stachelwalze 14 und Gitterrost 27 sind als rahmenartiges Bauteil ausgebildet, welches in den Auffangbehälter 13 eingeschoben ist.

Figur 5 zeigt den Sammelbehälter 16 bei der Entleerung. Hierbei wird an dem Entnahmestutzen 20 des Sammelbehälters 16 eine Fördereinrichtung 22 angeschlossen, welche Wildkrautsamen beispielhaft zu einem Beifahrzeug 23 fördert. Anschließend könnten die Wildkrautsamen beispielsweise zu Briketts oder Pellets zu Heizzwecken weiter verarbeitet werden.

## Patentansprüche

1. Vorrichtung (11) an Mähdreschern, bei welchem Spreu und Frucht in einem Luftstrom getrennt werden mit einem zur Anordnung in dem Luftstrom vorgesehenen Prallblech (12) zur Abtrennung von Wildkrautsamen aus dem Luftstrom und einem dem Prallblech (12) zugeordneten Auffangbehälter (13) für Wildkrautsamen, **dadurch gekennzeichnet, dass** an der Oberseite des Auffangbehälters (13) eine rotierende Stachelwalze (14) angeordnet ist.

2. Vorrichtung nach Anspruch 1, **dadurch gekennzeichnet, dass** das Prallblech (12) in seiner Position verstellbar ist.

3. Vorrichtung nach Anspruch 1 oder 2, **dadurch gekenn-zeichnet,** dass das Prallblech (12) in seiner Größe, mit der es in den Luftstrom hineinragt, verstellbar ist.

4. Vorrichtung nach einem der vorhergehenden Ansprüche, **dadurch gekennzeichnet, dass** der Auffangbehälter (13) und das Prallblech (12) eine bauliche Einheit bilden.

5. Vorrichtung nach einem der vorhergehenden Ansprüche, **dadurch gekennzeichnet, dass** das Prallblech (12) an einer in Strömungsrichtung des Luftstroms gesehen hinteren Wandung (21) des Auffangbehälters (13) angeordnet ist.

6. Vorrichtung nach einem der vorhergehenden Ansprüche, **dadurch gekennzeichnet, dass** der Auffangbehälter (13) über eine Fördereinrichtung (15) mit einem Sammelbehälter (16) für Wildkrautsamen verbunden ist.

7. Vorrichtung nach Anspruch 6, **dadurch gekennzeichnet, dass** die Fördereinrichtung (15) eine Saug- oder Blasvorrichtung aufweist.

8. Vorrichtung nach einem der vorhergehenden Ansprüche, **dadurch gekennzeichnet, dass** das Prallblech (12) und ein den Auffangbehälter (13) abdeckender Gitterrost (27) als bauliche Einheit ausgebildet sind.

9. Mähdrescher mit einer Vorrichtung (11) nach einem der vorhergehenden Ansprüchen, **dadurch gekennzeichnet, dass** das Prallblech (12) unmittelbar hinter einem Fruchtabscheider (4) zur Abscheidung der Frucht angeordnet ist.

10. Mähdrescher nach Anspruch 9, **dadurch gekennzeichnet, dass** die Leistung eines den Luftstrom zur Förderung von Frucht, Wildkrautsamen und Spreu erzeugenden Gebläses (8) einstellbar ist.

## Claims

1. Device (11) on combine-harvesters, in which chaff and grain are separated in an airflow with a baffle plate (12), which is intended for arrangement in said airflow, for separating weed seeds from the latter, and with a catching receptacle (13) for weed seeds which is associated with said baffle plate (12), **characterised in that** a rotating spiked roller (14) is arranged on the upper side of the catching receptacle (13).

2. Device according to Claim 1,
**characterised in that**
the baffle plate (12) is adjustable in its position.

3. Device according to Claim 1 or 2,
**characterised in that**
the baffle plate (12) is adjustable in the extent to which it projects into the airflow.

4. Device according to one of the preceding claims,
**characterised in that**
the catching receptacle (13) and the baffle plate (12) form one structural unit.

5. Device according to one of the preceding claims,
**characterised in that**
the baffle plate (12) is arranged on a wall (21) of the catching receptacle (13), which wall is a rear wall in the direction of flow of the airflow.

6. Device according to one of the preceding claims,
**characterised in that**
the catching receptacle (13) is connected to a collecting receptacle (16) for weed seeds via a conveying apparatus (15).

7. Device according to Claim 6,
**characterised in that**
the conveying apparatus (15) has a sucking or blowing device.

8. Device according to one of the preceding claims,
**characterised in that**
the baffle plate (12) and a grating (27) that covers the catching receptacle (13) are constructed as a structural unit.

9. Combine-harvester having a device (11) according to one of the preceding claims,
**characterised in that**
the baffle plate (12) is arranged immediately behind a grain-separator (4) for separating the grain.

10. Combine-harvester according to Claim 9,
**characterised in that**
it is possible to set the output of a blower (8) that generates the airflow for conveying grain, weed seeds and chaff.

## Revendications

1. Dispositif (11) dans des moissonneuses-batteuses, dans lequel la balle et les grains de céréales sont séparés dans un écoulement ou courant d'air, le dispositif comprenant une tôle déflectrice (12) prévue pour être agencée dans le courant d'air pour la séparation de graines d'adventices ou mauvaises herbes du courant d'air, et un réceptacle de récupération (13) pour les graines d'adventices, qui est associé à la tôle déflectrice (12),
**caractérisé en ce que** sur le côté supérieur du réceptacle de récupération (13) est agencé un cylindre batteur à pointes (14).

2. Dispositif selon la revendication 1, **caractérisé en ce que** la tôle déflectrice (12) est réglable quant à sa position.

3. Dispositif selon la revendication 1 ou la revendication 2, **caractérisé en ce que** la tôle déflectrice (12) est réglable quant à la taille avec laquelle elle s'engage dans le courant d'air.

4. Dispositif selon l'une des revendications précédentes, **caractérisé en ce que** le réceptacle de récupération (13) et la tôle déflectrice (12) forment une unité de construction.

5. Dispositif selon l'une des revendications précédentes, **caractérisé en ce que** la tôle déflectrice (12) est agencée au niveau d'une paroi arrière (21) du réceptacle de récupération (13), en se référant à la direction d'écoulement du courant d'air.

6. Dispositif selon l'une des revendications précédentes, **caractérisé en ce que** le réceptacle de récupération (13) est relié, par l'intermédiaire d'un système de transport (15), à un réservoir de collecte (16) pour les graines d'adventices.

7. Dispositif selon la revendication 6, **caractérisé en ce que** le système de transport (15) comprend un dispositif d'aspiration ou de soufflage.

8. Dispositif selon l'une des revendications précédentes, **caractérisé en ce que** la tôle déflectrice (12) et une grille (27) recouvrant le réceptacle de récupération (13) sont réalisées en tant qu'une unité de construction.

9. Moissonneuse-batteuse comprenant un dispositif (11) selon l'une des revendications précédentes, **caractérisée en ce que** la tôle déflectrice (12) est agencée directement derrière un séparateur de grains de céréales (4) pour la séparation des grains de céréales.

10. Moissonneuse-batteuse selon la revendication 9, **caractérisée en ce que** la puissance d'une soufflante (8), qui produit le courant d'air pour le transport des grains de céréales, des graines d'adventices et de la balle, est réglable.
